(19) Europäisches Patentamt
European Patent Office
Office européen des brevets

(11) EP 2 686 704 B1

(12) **FASCICULE DE BREVET EUROPEEN**

(45) Date de publication et mention de la délivrance du brevet:
**27.05.2015 Bulletin 2015/22**

(21) Numéro de dépôt: **12709627.9**

(22) Date de dépôt: **16.03.2012**

(51) Int Cl.:
***G01S 19/29*** *(2010.01)* ***G01S 19/20*** *(2010.01)*
***G01S 19/26*** *(2010.01)*

(86) Numéro de dépôt international:
**PCT/EP2012/054683**

(87) Numéro de publication internationale:
**WO 2012/123577 (20.09.2012 Gazette 2012/38)**

(54) **DETECTION ET CORRECTION D'INCOHERENCE DE PHASE PORTEUSE EN POURSUITE D'UN SIGNAL DE RADIONAVIGATION**

ERKENNUNG UND KORREKTUR DER TRÄGERPHASENINKONSISTENZ WÄHREND ZUR VERFOLGUNG EINES FUNKNAVIGATIONSSIGNALS

DETECTION AND CORRECTION OF CARRIER PHASE INCONSISTENCY DURING THE TRACKING OF A RADIO NAVIGATION SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2011 FR 1100789**

(43) Date de publication de la demande:
**22.01.2014 Bulletin 2014/04**

(73) Titulaire: **Sagem Défense Sécurité**
**92100 Boulogne-Billancourt (FR)**

(72) Inventeur: **LEBRAT, Jean-Philippe**
**F-75015 Paris (FR)**

(74) Mandataire: **Regimbeau**
**20, rue de Chazelles**
**75847 Paris Cedex 17 (FR)**

(56) Documents cités:
**US-A- 5 969 672**
**US-A1- 2001 020 216**
**US-A1- 2010 253 402**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 686 704 B1

**Description**

DOMAINE TECHNIQUE GENERAL

L'invention concerne la radionavigation par satellites, notamment la radionavigation par satellites de type GNSS (en anglais, « *Global Navigation Satellite Systems* ») et plus particulièrement du type GPS (en anglais, « *Global Positioning System* »), Galileo, GLONASS (en anglais, « *Global Navigation Satellite System* »).

ETAT DE LA TECHNIQUE

La radionavigation par satellites permet d'obtenir la position d'un récepteur par une méthode voisine de la triangulation. Les distances sont mesurées à partir de signaux envoyés par des satellites.

De manière plus précise, un récepteur de positionnement par satellites permet, notamment, de délivrer un ensemble de pseudo-vitesses ou Doppler intégrés, chacune représentant la projection sur l'axe reliant le récepteur à chaque satellite en vue du vecteur vitesse relative entre le récepteur et ledit satellite.

Les signaux émis par les satellites sont formés par modulation de la porteuse du signal avec un code d'étalement. Ainsi, les signaux satellites permettent deux types de mesures afin de localiser le récepteur. De plus, la modulation de la porteuse par un code d'étalement étend le spectre dans la bande spectrale, ce qui accroît la résistance du système au brouillage. Et, en outre, cela permet de dissocier les satellites (en utilisant un code différent pour chaque satellite dans le cas du GPS).

Le premier type de mesure utilise le code du signal reçu. Les mesures basées sur le code, contrairement à celles basées sur la porteuse (voir ci-dessous), ne sont pas ambiguës, car le récepteur est capable d'évaluer le nombre entier de période de code entre le satellite et le récepteur. Mais, les mesures basées sur le code sont beaucoup moins précises que celles basées sur la porteuse.

Le second type de mesure est une mesure basée sur la porteuse du signal reçu. Les mesures basées sur la porteuse sont précises mais ambiguës. En effet, le récepteur est seulement capable d'évaluer la phase de la porteuse, donc le nombre de longueurs d'onde entre le satellite et le récepteur reste inconnu : il y a donc une ambiguïté à lever.

Pour effectuer ces deux types de mesures, le récepteur acquiert et poursuit le signal reçu. Pour cela, il génère les répliques du code et de la porteuse, dites locales, qu'il corrèle avec le signal reçu. Le code et la porteuse étant des informations non cohérentes, les générations des répliques de code et de porteuse sont asservies par deux boucles distinctes.

La boucle de porteuse est généralement une boucle à verrouillage de phase (en anglais, « *Phase Locked Loop* », (PLL)). La boucle de code comporte, quant à elle, généralement une double corrélation permettant d'évaluer le décalage entre le code local et le code reçu qui correspond à une différence d'énergies mesurables.

Le récepteur utilise ces deux boucles afin d'obtenir des mesures précises non ambiguës.

Dans une première phase, dite d'acquisition, le récepteur opère en boucle ouverte pour rechercher le signal reçu en testant plusieurs hypothèses de position et de vitesse du code local et de la porteuse locale. Chaque boucle d'asservissement est fermée lorsque l'incertitude sur son entrée (position pour le code et fréquence pour la porteuse) devient inférieure au domaine d'application du discriminant de la boucle.

Ainsi, les deux boucles sont complémentaires au cours de la phase de poursuite du signal reçu : la boucle de porteuse apporte la précision tandis que la boucle de code apporte la robustesse.

Toutefois, une source d'erreur d'asservissement de la boucle de porteuse est due à la traversée de l'ionosphère par les ondes en provenance des satellites.

De telles imprécisions entraînent des sauts de cycles sur la boucle de porteuse, et donc des erreurs de mesure sans nécessairement entraîner un décrochage de la boucle de porteuse de sorte qu'il n'y a pas de raccrochage de la boucle de porteuse : la solution de navigation est par conséquent erronée.

US 5 969 672 divulgue un récepteur GPS adapté pour acquérir et poursuivre la phase de la porteuse du signal satellite en comparant un premier signal indicatif de l'accélération provenant du système GPS avec un deuxième signal indicatif de l'accéleration provenant de l'unité inertielle.

PRESENTATION DE L'INVENTION

L'invention permet de pallier les inconvénients précités.

A cet effet, selon un premier aspect, l'invention concerne un procédé de poursuite de la phase porteuse d'un signal reçu d'un satellite par un porteur au moyen d'une boucle de poursuite de la phase porteuse, ledit signal étant acquis par un système de navigation du porteur qui comprend un récepteur de localisation par radionavigation et une unité autonome, le récepteur étant adapté pour acquérir et poursuivre la phase de la porteuse du signal issu du satellite.

Le procédé comprend les étapes suivantes :

- détermination d'une erreur d'asservissement de la boucle de phase porteuse, ladite erreur d'asservissement étant déterminée entre deux instants d'échantillonnage et correspondant à un premier écart de phase ;
- détermination d'une variation d'accélération du porteur entre les deux instants d'échantillonnage au moyen de l'unité autonome ;
- projection de la variation d'accélération sur un axe à vue satellite-récepteur pour obtenir un second écart de phase ;

- comparaison des premier et second écarts pour détecter une erreur sur la mesure de la phase porteuse poursuivie par ladite boucle de phase porteuse.

Le procédé selon l'invention peut en outre comporter l'un ou l'autre des aspects suivants :

- la variation d'accélération du porteur est obtenue au moyen d'un modèle numérique implémenté dans un module du système de navigation ;
- la variation d'accélération du porteur est déterminée au moyen d'une centrale inertielle du système de navigation ;
- la comparaison consiste à déterminer une incohérence du premier écart avec le second écart ;
- l'incohérence est intégrée sur une période glissante d'une durée de l'ordre de un à cinq fois une constante de temps d'un filtre de la boucle de phase porteuse puis comparée à un seuil, typiquement de $\lambda/4$, le procédé comprend une étape de génération d'un signal de réplique du signal reçu à partir de l'écart de phase $\{\delta\gamma_n \cdot \delta t^2\}_{projeté}$ issu de l'unité autonome ;
- il comprend une étape de détermination d'une solution de navigation à partir des Doppler intégrés issus du signal de réplique généré.
- si l'incohérence est supérieure à un seuil, typiquement de l'ordre de $\lambda/4$, le procédé comprend une étape de correction des Doppler intégrés nécessaires à la solution de navigation, la correction consistant à ajouter un terme $k \cdot \lambda/2$ auxdits Doppler intégrés où k est un entier relatif tel que la valeur absolue de l'incohérence intégrée est inférieure à un seuil, le seuil étant typiquement de l'ordre de $\lambda/4$ ;
- il comprend une étape de détermination d'une solution de navigation à partir des Doppler intégrés corrigés ;
- la comparaison consiste à calculer un terme d'incohérence défini de la manière suivante : $\frac{\lambda}{2\pi} \cdot \{\delta\phi_n\}_{redressé} - \{\delta\gamma_n \cdot \delta t^2\}_{projeté}$ où $\{\delta\varphi_n\}_{redressé}$ est le premier écart de phase et $\{\delta\gamma_n \cdot \delta t^2\}_{projeté}$ est homogène à une distance correspondant au second écart de phase et $\lambda$ est la longueur d'onde associée à la fréquence porteuse du signal reçu.

Selon un second aspect, l'invention concerne un système dé navigation comprenant des moyens pour la mise en oeuvre d'un procédé selon le premier aspect de l'invention.

PRESENTATION DES FIGURES

D'autres caractéristiques et avantages de l'invention ressortiront encore de la description qui suit laquelle est purement illustrative et non limitative et doit être lue en regard des dessins annexés sur lesquels

- la figure 1 illustre schématiquement un système de navigation conforme à l'invention ;
- la figure 2 illustre schématiquement des étapes du procédé selon l'invention ;
- La figure 3 illustre de manière détaillée un système de navigation conforme à l'invention.

DESCRIPTION DETAILLEE DE L'INVENTION

Sur la figure 1 on a représenté un système de navigation embarqué dans un porteur, typiquement un aéronef, à localiser.

Un tel système de navigation comporte un récepteur 10 de localisation par radionavigation, de préférence un récepteur GPS ou GNSS. Le récepteur peut être multicanaux et dans ce cas chaque canal correspond à un satellite qui transmet un signal reçu par le récepteur 10.

Le récepteur 10 comporte une antenne 100 de réception capable de recevoir un signal provenant d'un ou plusieurs satellite(s) (non représenté).

On se place dans le cas où le signal reçu par le système de navigation est un signal GPS.

De manière connue, les signaux de radionavigation émis par des satellites se présentent sous la forme d'une porteuse modulée par une forme d'onde d'étalement contenant un code binaire pseudo-aléatoire. La modulation de la porteuse provoquant l'étalement du spectre autour de la fréquence de la porteuse, les signaux de radionavigation sont à spectre étalé.

Les codes pseudo-aléatoires représentent un identifiant du signal et donc du satellite émetteur.

En outre, certains signaux de positionnement par satellites peuvent aussi transporter des données utiles (par exemple le message de navigation) sous forme d'une séquence binaire (à rythme nettement moins élevé que le code pseudo-aléatoire) modulant le signal issu de la porteuse modulée par le code.

Dans le cas du GPS, les signaux de radionavigation sont transmis dans les bandes de fréquences L1, centrée sur 1575,42 MHz et L2, centrée sur 1227,6 MHz.

En outre, le système de navigation de la figure 1 comporte une unité autonome 20 et une unité 30 de détection et correction des erreurs d'asservissement éventuelles. On précise ici que l'unité autonome 20 ne reçoit aucun signal en provenance d'un ou plusieurs satellite(s) et de ce fait est autonome. Les mesures qu'elle fournit sont par la suite distinguées des autres par le qualificatif autonome.

Le récepteur 10 fonctionne de manière connue en mode acquisition ou poursuite.

On considère ici que l'on est en mode poursuite c'est-à-dire que le récepteur permet de fournir une solution de navigation, à partir d'un ensemble de pseudo-distances et de pseudo-vitesses ou Doppler intégrés qui permettent la localisation du porteur.

C'est à partir de ces mesures que la solution de navigation du porteur est déterminée.

Il s'agit en particulier de la résolution d'un ensemble d'équations obtenues à partir de ces pseudo-mesures. Ces traitements ne seront pas détaillés par la suite puisque bien connus de l'homme du métier.

De manière plus précise, la réception d'un signal de radionavigation comprend une première démodulation à l'aide d'une réplique interne de la phase porteuse générée dans le récepteur par un oscillateur piloté par une boucle de poursuite de la phase porteuse et une seconde démodulation à l'aide d'une réplique interne de la forme du code d'étalement produite par une boucle de poursuite de code.

Les signaux d'asservissement des boucles de poursuite de la phase porteuse et du code sont utilisés par le récepteur pour déterminer les pseudo-mesures, permettant d'obtenir la solution de navigation.

Comme on l'a déjà mentionné ci-dessus le système de navigation comporte une unité 30 de détection et correction des erreurs d'asservissement.

Cette unité 30 permet de mettre en ouvre un procédé de surveillance de la boucle de poursuite de la phase porteuse du signal reçu d'un satellite. Un tel procédé est bien entendu implémenté pour chaque canal dans le cas où le récepteur est multicanaux.

Le but de ce procédé est de détecter un ou plusieurs sauts de cycles dans la phase de la porteuse et de les corriger.

On a représenté, schématiquement, sur la figure 2 des étapes d'un tel procédé.

Dans une première étape E1, on détermine une erreur d'asservissement de la boucle de phase porteuse entre deux instants. Ainsi cette erreur d'asservissement est un premier écart de phase. Cet écart de phase permet à la boucle de poursuite de phase porteuse de se recaler.

Ce premier écart de phase est pris entre échantillons consécutifs mesurés en sortie de la boucle de phase porteuse. Un tel écart de phase s'exprime par $\delta\varphi_n = \varphi_n - \varphi_{n-1}$ où n est un indice correspondant à l'instant de calcul.

Dans une seconde étape E2 (qui peut en pratique être mise en oeuvre avant ou en parallèle de la première étape E1 ci-dessus décrite) on détermine une variation d'accélération du porteur entre les deux instants.

Cette variation d'accélération est déterminée par l'unité 20 autonome du système de navigation.

Selon un mode de réalisation, l'unité autonome 20 peut comporter un modèle numérique inertiel qui permet de déterminer la variation d'accélération du porteur par rapport au satellite.

Compte tenu que le mouvement du satellite (le porteur dans ce cas) est principalement régi par les lois de Kepler, en conséquence, la position du satellite est déterminée à partir des paramètres orbitaux de Kepler. La vitesse d'un satellite est déterminée par dérivation (formule exacte, de manière préférentielle) ou par différenciation de la position. L'accélération est obtenue par différenciation de la vitesse.

Selon un autre mode de réalisation, l'unité autonome 20 est une centrale inertielle.

Tel que connu, une centrale inertielle est principalement composée de deux groupes de trois senseurs. Les groupes de senseurs sont les gyromètres (mesures de rotation) et les accéléromètres (mesures d'accélération). Les trois senseurs de chaque groupe sont orientés pour capter les mouvements dans l'espace (à trois dimensions). L'intégration des mesures accélérométriques fournit la vitesse suivant l'axe de chaque accéléromètre, et l'intégration des vitesses fournit la position de chaque accéléromètre suivant son axe. Les intégrations appellent la détermination des constantes d'initialisation : c'est l'objet de l'alignement inertiel.

Le mouvement d'un mobile étant quelconque, l'orientation des axes des accéléromètres varie, donc il est nécessaire de projeter les mesures d'accélération dans un repère de référence : c'est l'objet des gyromètres de déterminer la rotation des axes de mesure des accéléromètres.

Ainsi, dans une troisième étape E3, on projette la variation d'accélération sur un axe à vue satellite-récepteur de manière à obtenir une mesure relative, cette variation d'accélération projetée représentant un second écart de phase.

La projection de la variation d'accélération est homogène à des mètres (m) et comme une longueur d'onde est équivalente à $2\pi$ radians on peut simplement passer de la variation d'accélération projetée à un écart de phase porteuse.

Ensuite, dans une quatrième étape E4, on compare les premier et second écarts pour détecter une éventuelle erreur sur la phase porteuse poursuivie par la boucle de phase porteuse.

Il s'agit ici en particulier, d'identifier si l'écart de phase permettant de piloter la boucle de phase porteuse est erroné ou incohérent ou bien encore si elle fait l'objet de sauts de cycles.

Enfin, dans une cinquième étape E5, on détermine la solution de navigation à partir de l'écart de phase mesurée par la boucle de porteuse et éventuellement corrigée à partir de la variation d'accélération projetée issue des mesures effectuées par l'unité 20 autonome.

La solution de radionavigation est déterminée à partir des pseudo-mesures, par exemple par un algorithme des moindres carrés, et met en oeuvre un écart de phase.

La comparaison E4 consiste notamment à déterminer une incohérence du premier écart avec le second écart.

Si l'incohérence déterminée est supérieure à un seuil, une alerte d'incohérence peut être levée, le second écart de phase remplace le premier et la détermination E6 de la solution de navigation est issue de l'asservissement corrigé.

De manière alternative la détermination E6 de la solution de navigation est effectuée à partir de pseudo-mesures corrigées.

On a représenté sur la figure 3 un schéma détaillé d'un système de navigation.

Comme sur le schéma de la figure 1, un signal du type GPS est reçu par une antenne de radionavigation 100.

Au niveau de l'antenne 100, le signal est préamplifié, puis filtré, subit un abaissement en fréquence et subit enfin une conversion analogique numérique afin d'être traité numériquement.

De manière connue, en mode poursuite une boucle de phase porteuse poursuit la phase porteuse du signal reçu. La boucle de phase porteuse est pilotée par un oscillateur local 18 qui permet au cours de la poursuite de la phase porteuse de corriger un écart de phase entre la réplique locale et le signal reçu. En effet la solution de navigation est calculée à partir du signal local qui doit être une réplique quasi-parfaite du signal reçu.

Au niveau de l'oscillateur local 18, un signal local de réplique est généré. Un tel signal de réplique est de manière connue constitué par une porteuse (sinusoïde) modulée par un code binaire pseudo-aléatoire ; il est échantillonné à une fréquence de l'ordre de quelques MHz à quelques dizaines de MHz. La fréquence de la réplique de la porteuse est égale à la fréquence d'émission de la porteuse par le satellite (1,57542 GHz dans le cas du GPS L1), diminuée de l'abaissement de fréquence par le récepteur, et augmentée du Doppler relatif satellite/porteur. L'objet de la boucle d'asservissement sur la phase porteuse est précisément de déterminer ce Doppler relatif. La fréquence de la réplique du code est égale à la fréquence d'émission du code par le satellite (1,023 MHz dans le cas du code GPS C/A), augmentée de l'entraînement du code par la porteuse (c'est-à-dire du Doppler estimé par la boucle de porteuse), et augmentée de l'incohérence code-porteuse, objet de la boucle d'asservissement sur le code.

A partir du signal reçu et du signal local généré par l'oscillateur local 18 on détermine une voie en phase I et une voie en quadrature Q du produite de corrélation entre les deux signaux, voies qui seront utilisées par la suite.

La voie I est en particulier l'intégrale du produit du signal reçu par le signal local, cette intégrale étant effectuée à une fréquence de l'ordre de quelques à quelques dizaines de MHz (voir fréquence d'échantillonnage de l'oscillateur local 18), et sur un horizon de 1 ms ou une époque du code C/A, la voie I étant alors fournie en sortie puis remise à zéro.

La voie Q est déterminée de manière similaire à la voie I mais le signal local est en avance de phase porteuse de $\pi/2$ par rapport à celui utilisée pour le calcul de la voie I.

De ces deux voies I, Q on détermine 12 un discriminant de boucle de porteuse. Un tel discriminant est obtenu en calculant $\mathrm{Arc\,tan}\left(\frac{Q}{I}\right)$. De ce discriminant on déduit une valeur de la phase de la porteuse $\varphi_n$.

Comme le signal reçu comporte des données de navigation codant une information, la phase porteuse est redressée 13, 14, 15 pour retirer ces données.

Il s'agit notamment de déterminer 13, 15 un écart de phase pris entre deux instants de calcul (ou bien deux échantillons): $\delta\varphi_n = \varphi_n - \varphi_{n-1}$.

Cette écart de phase $\delta\varphi_n$ va permettre d'obtenir 14 un écart de phase redressé $\{\delta\varphi_n\}_{redressé}$.

En particulier, si $\delta\varphi_n > \pi/2$ alors $\delta\varphi_n$ est diminué de $\pi$ alors que si $\delta\varphi_n < -\pi/2$ alors $\delta\varphi_n$ est augmenté de $\pi$.

C'est donc un écart de phase $\delta\varphi_n$ redressé qui est utilisé pour déterminer s'il y a une ambigüité sur la phase porteuse.

C'est cet écart de phase $\{\delta\varphi_n\}_{redressé}$ qui est intégré 16 pendant toute la durée de l'asservissement puis filtré par une boucle du troisième ordre 17 puis envoyé en entrée de l'oscillateur local 18 pour générer un signal de réplique du signal reçu.

Auparavant, le module 30 de détection et de correction d'erreur peut avoir à corriger une erreur.

Pour ce faire, le module 30 reçoit d'une part l'écart de phase $\{\delta\varphi_n\}_{redressé}$ provenant de la boucle de phase porteuse (dynamique mesurée par la boucle de phase porteuse) et la dynamique autonome qui est en fait une variation d'accélération projetée sur un axe à vue satellite-porteur.

La variation d'accélération déterminée par l'unité 20 autonome est obtenue soit à partir d'un modèle inertiel soit à partir d'une centrale inertielle 23.

Une telle variation d'accélération est obtenue par la détermination d'une dynamique autonome traitée par une module d'intégration de la navigation 22 pour obtenir une mesure autonome et donc absolue de l'accélération $\gamma_n$ de la position $P_n$ et de la vitesse $V_n$.

La variation d'accélération est projetée sur un axe à vue satellite - récepteur par un module de projection 23.

De cette projection on obtient une variation de l'accélération projetée sur axe à vue $\{\delta\gamma_n \cdot \delta t^2\}_{projeté}$ donc autonome.

La variation d'accélération est déterminée sur la même période de calcul que celle pour déterminer la variation de phase au niveau de la boucle de phase porteuse.

Pour détecter une éventuelle erreur le module de correction, 30 détermine un terme d'incohérence défini de la manière suivante : $\frac{\lambda}{2\pi} \cdot \{\delta\phi_n\}_{redressé} - \{\delta\gamma_n \cdot \delta t^2\}_{projeté}$ où $\{\delta\varphi\}_{redressé}$ est le premier écart de phase $\{\delta\gamma_n \cdot \delta t^2\}_{projeté}$ est homogène à une distance correspondant au second écart de phase projeté et $\lambda$ est la longueur d'onde associée à la fréquence porteuse du signal reçu.

Si le terme ci-dessus est supérieur à un seuil la mesure de la phase porteuse $\{\delta\varphi_n\}_{redressé}$ est entachée d'une erreur.

Dans ce cas il y a deux solutions pour la levée de l'erreur.

La première solution consiste à utiliser E5 l'écart de phase obtenu de l'unité 20 autonome, $\{\delta\gamma_n \cdot \delta t^2\}_{projeté}$ pour la génération du signal de réplique. Dans ce cas là, le seuil est de l'ordre de $3\sigma_{\varphi_n}$ à $\lambda/4$ où $\sigma_{\varphi_n}$ est fonction du rapport signal sur bruit.

C'est ce signal de réplique qui sera utilisé pour mesurer les pseudo-vitesses ou Doppler intégrés nécessaires au calcul de la solution de navigation.

La seconde consiste à corriger E5' les Dopplers intégrés en leur ajoutant un terme $k \cdot \lambda/2$ où k est un entier relatif tel que $|incohérence|_{intégrée}$ <seuil. En particulier l'incohérence est intégrée sur période glissante d'une durée de l'ordre de 1 à 5 fois la constante du filtre de la boucle d'asservissement sur la porteuse. Le seuil est de l'ordre de $\lambda/4$.

La première solution n'est applicable que lorsque l'estimation 25 de $\{\delta\gamma_n \cdot \delta t^2\}_{projeté}$ est disponible à l'instant de calcul du filtrage 17.

La seconde solution est applicable dans tous les cas, mais devient obligatoire lorsque la première solution n'est pas applicable. Dans ce cas, l'écart de phase porteuse $\{\delta\varphi_n\}_{redressé}$ doit être mémorisé afin que le calcul du terme d'incohérence porte sur des mesures - autonome et radionavigation - synchronisées (c'est-à-dire issues de la même période temporelle).

## Revendications

1. Procédé de poursuite de la phase porteuse d'un signal reçu d'un satellite par un porteur au moyen d'une boucle de poursuite de la phase porteuse, ledit signal étant acquis par un système de navigation du porteur qui comprend un récepteur (10) de localisation par radionavigation et une unité autonome (20), le récepteur (10) étant adapté pour acquérir et poursuivre la phase de la porteuse du signal issu du satellite, le procédé comprenant les étapes suivantes :

    - détermination (E1) d'une erreur d'asservissement de la boucle de phase porteuse, ladite erreur d'asservissement étant déterminée entre deux instants d'échantillonnage et correspondant à un premier écart de phase ;
    - détermination (E2) d'une variation d'accélération du porteur entre les deux instants d'échantillonnage au moyen de l'unité (20) autonome ;
    - projection (E3) de la variation d'accélération sur un axe à vue satellite-récepteur pour obtenir un second écart de phase ;
    - comparaison (E4) des premier et second écarts pour détecter une erreur sur la mesure de la phase porteuse poursuivie par ladite boucle de phase porteuse, ladite comparaison consistant à déterminer une incohérence du premier écart avec le second écart.

2. Procédé selon la revendication 1, dans lequel la variation d'accélération du porteur est obtenue au moyen d'un modèle numérique implémenté dans un module (21) du système de navigation.

3. Procédé selon la revendication 1, dans lequel la variation d'accélération du porteur est déterminée au moyen d'une centrale inertielle (21) du système de navigation.

4. Procédé selon l'une des revendications précédentes, dans lequel l'incohérence est intégrée sur une période glissante d'une durée de l'ordre de un à cinq fois une constante de temps d'un filtre de la boucle de phase porteuse puis comparée à un seuil, typiquement de $\lambda/4$, le procédé comprend une étape (E5) de génération d'un signal de réplique du signal reçu à partir de l'écart de phase $\{\delta\gamma_n . \delta t^2\}_{projeté}$ issu de l'unité (20) autonome, où $V_n$ représente l'accélération.

5. Procédé selon la revendication 4, comprenant une étape (E6) de détermination d'une solution de navigation à partir des Doppler intégrés issus du signal de réplique généré.

6. Procédé selon l'une des revendications précédentes, dans lequel si l'incohérence est supérieure à un seuil, typiquement de l'ordre de z./4, le procédé comprend une étape (E5') de correction des Doppler intégrés nécessaires à la solution de navigation, la correction consistant à ajouter un terme $k \cdot \lambda/2$ auxdits Doppler intégrés où k est un entier relatif tel que la valeur absolue de l'incohérence intégrée est inférieure à un seuil, le seuil étant typiquement de l'ordrede $\lambda/4$.

7. Procédé selon la revendication 6, comprenant une étape (E6) de détermination d'une solution de navigation à partir des Doppler intégrés corrigés.

8. Procédé selon l'une des revendications précédentes, dans lequel la comparaison consiste à calculer un terme d'incohérence défini de la manière suivante : $\frac{\lambda}{2\pi} \cdot \{\delta\phi_n\}_{redressé} - \{\delta\gamma_n \cdot \delta t^2\}_{projeté}$

    où $\{\delta\varphi_n\}_{redressé}$ est le premier écart de phase et $\{\delta\gamma_n \cdot \delta t^2\}_{projeté}$ est homogène à une distance correspondant au second écart de phase et $\lambda$ est la longueur d'onde associée à la fréquence porteuse du signal reçu. $\varphi_n$ est la valeur de la phase de la porteuse.

9. Système de navigation comprenant un récepteur de positionnement par satellites comprenant des moyens pour la mise en oeuvre d'un procédé selon l'une des revendications précédentes.

## Patentansprüche

**1.** Verfahren zur Verfolgung der Trägerphase eines von einem Satelliten herkommenden Signals, das mittels eines Trägers empfangen wird, mit Hilfe einer Trägerphase-Verfolgungsschleife, wobei das Signal von einem Träger-Navigationssystem erfasst wird, das einen Empfänger (10) für Funknavigationsortung und eine autonome Einheit (20) aufweist, wobei der Empfänger (10) konfiguriert ist, die Phase der Trägerwelle des von dem Satelliten herkommenden Signals zu erfassen und zu verfolgen, wobei das Verfahren die folgenden Schritte aufweist:

- Bestimmen (E1) eines Regelungsfehlers der Trägerphasenschleife, wobei der Regelungsfehler zwischen zwei Abtastzeitpunkten bestimmt wird und einem ersten Phasenwinkel entspricht;
- Bestimmen (E2) einer Beschleunigungsänderung des Trägers zwischen zwei Abtastzeitpunkten mit Hilfe der autonomen Einheit (20);
- Projizieren (E3) der Beschleunigungsänderung auf eine Sichtachse Satellit-Empfänger, um einen zweiten Phasenwinkel zu gewinnen;
- Vergleichen (E4) des ersten und zweiten Phasenwinkels, um einen Fehler an der Messung der von der Trägerphasenschleife verfolgten Trägerphase zu ermitteln, wobei der Vergleich darin besteht, eine Inkohärenz zwischen dem ersten Phasenwinkel und dem zweiten Phasenwinkel zu bestimmen.

**2.** Verfahren nach Anspruch 1, wobei die Beschleunigungsänderung des Trägers mit Hilfe eines numerischen Modells, das in einem Modul (21) des Navigationssystems implementiert ist, gewonnen wird.

**3.** Verfahren nach Anspruch 1, wobei die Beschleunigungsänderung des Trägers mit Hilfe einer Trägheitseinrichtung (21) des Navigationssystems gewonnen wird.

**4.** Verfahren nach einem der vorstehenden Ansprüche, wobei die Inkohärenz über einen gleitenden Zeitraum einer Dauer in der Größenordnung von eins bis fünf Mal einer Zeitkonstante eines Filters der Trägerphasenschleife integriert wird, dann mit einem Schwellenwert, typisch $\lambda/4$, verglichen wird, wobei das Verfahren einen Schritt (E5) aufweist, in welchem ausgehend von dem aus der autonomen Einheit (20) abgeleiteten Phasenwinkel $\{\delta\gamma_n{*}\delta t^2\}_{projiziert}$, wobei $\gamma_n$ die Beschleunigung bedeutet, ein Wiederholungssignal des empfangenen Signals erzeugt wird.

**5.** Verfahren nach Anspruch 4, mit einem Schritt (E6), in welchem ausgehend von den Doppler-Integralen, die von dem erzeugten Wiederholungssignal abgeleitet sind, eine Navigationslösung ermittelt wird.

**6.** Verfahren nach einem der vorstehenden Ansprüche, wobei in dem Fall, dass die Inkohärenz größer als ein Schwellenwert, typisch in der Größenordnung von $\lambda/4$, ist, das Verfahren einen Schritt (E5') der Korrektur der für die Navigationslösung notwendigen Doppler-Integrale aufweist, wobei die Korrektur darin besteht, den Doppler-Integralen einen Term $k{*}\lambda/2$ hinzuzufügen, wobei k eine ganze Zahl ist, derart, dass der Absolutwert der integrierten Inkohärenz kleiner als eine Schwelle ist, wobei die Schwelle typisch in der Größenordnung von $\lambda/4$ ist.

**7.** Verfahren nach Anspruch 6, mit einem Schritt (E6) der Ermittlung einer Navigationslösung aus den korrigierten Doppler-Integralen.

**8.** Verfahren nach einem der vorstehenden Ansprüche, wobei der Vergleich darin besteht, einen Inkohärenzterm zu berechnen, der folgendermaßen definiert ist:

$(\lambda/2\pi){*}\ \{\delta\varphi_n\}_{berichtigt} - \{\delta\gamma_n{*}\delta t^2\}_{projiziert}$,
wobei $\{\delta\varphi_n\}_{berichtigt}$ der erste Phasenwinkel ist und
$\{\delta\gamma_n{*}\delta t^2\}_{projiziert}$ gleich einem Abstand ist, der dem zweiten Phasenwinkel entspricht, und
$\lambda$ die der Trägerfrequenz des empfangenen Signals zugehörige Wellenlänge ist und $\varphi_n$ der Wert der Phase der Trägerwelle ist.

**9.** Navigationssystem mit einem satellitengestützten Positionierungsempfänger, der Einrichtungen zur Durchführung eines Verfahrens nach einem der vorstehenden Ansprüche auf-weist.

## Claims

**1.** A method for tracking the carrier phase of a signal received from a satellite by a carrier by means of a carrier phase tracking loop, said signal being acquired by a navigation system of the carrier which comprises a localization receiver (10) by radio navigation and a self-contained unit (20), the receiver (10) being adapted for acquiring and tracking the phase of the carrier of the signal from the satellite, the method comprising the following steps:

- determining (E1) a closed-loop control error of the carrier phase loop, said closed-loop control error being determined between two sampling instants and corresponding to a first phase deviation;

- determining (E2) an acceleration variation of the carrier between the two sampling instants by means of the self-contained unit (20);
- projecting (E3) the acceleration variation on a satellite-receiver view axis for obtaining a second phase deviation;
- comparing (E4) the first and second deviations in order to detect an error on the measurement of the carrier phase tracked by said carrier phase loop, said comparison consisting of determining inconsistency of the first deviation with the second deviation.

**2.** The method according to claim 1, wherein the acceleration variation of the carrier is obtained by means of a numerical model implemented in a module (21) of the navigation system.

**3.** The method according to claim 1, wherein the acceleration variation of the carrier is determined by means of an inertial unit (21) of the navigation system.

**4.** The method according to one of the preceding claims, wherein the inconsistency is integrated over a sliding period with a duration of the order of one to five times a time constant of a filter of the carrier phase loop and then compared with the threshold, typically of $\lambda/4$, the method comprises a step (E5) for generating a replica signal of the received signal from the phase deviation $\{\delta\gamma_n \cdot \delta t^2\}_{projected}$ stemming from the self-contained unit (20), wherein $\gamma_n$ represents the acceleration.

**5.** The method according to claim 4, comprising a step (E6) for determining a navigation solution from integrated dopplers stemming from the generated replica signal.

**6.** The method according to one of the preceding claims, wherein if the inconsistency is greater than the threshold, typically of the order of $\lambda/4$, the method comprises a step (E5') for correcting the integrated dopplers required for the navigation solution, the correction consisting of adding a term $k \cdot \lambda/2$ to said integrated dopplers wherein k is a relative integer such that the absolute value of the integrated inconsistency is less than the threshold, the threshold being typically of the order of $\lambda/4$.

**7.** The method according to claim 6, comprising a step (E6) for determining a navigation solution from the corrected integrated dopplers.

**8.** The method according to one of the preceding claims, wherein the comparison consists of calculating an inconsistency term defined in the following way:

$$\frac{\lambda}{2\pi} \cdot \{\delta\varphi_n\}_{rectified} - \{\delta\gamma_n \cdot \delta t^2\}_{projected}$$

wherein $\{\delta\varphi_n\}_{rectified}$ is the first * phase deviation and $\{\delta\gamma_n \cdot \delta t^2\}_{projected}$ is homogeneous to a distance corresponding to the second phase deviation and $\lambda$ is the wavelength associated with the carrier frequency of the received signal, $\varphi_n$ is the value of the phase of the carrier.

**9.** A navigation system comprising a satellite position receiver comprising means for applying a method according to one of the preceding claims.

FIG. 1

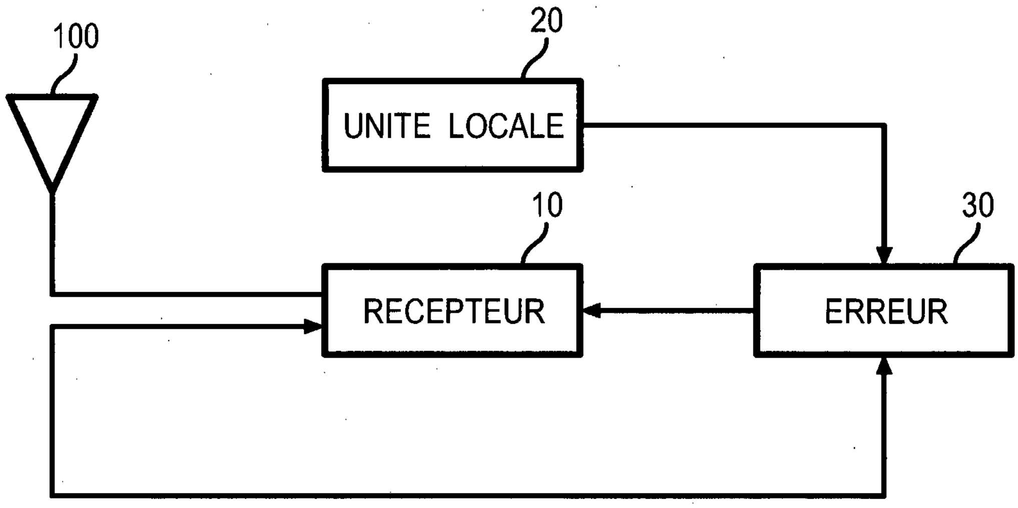

FIG. 2

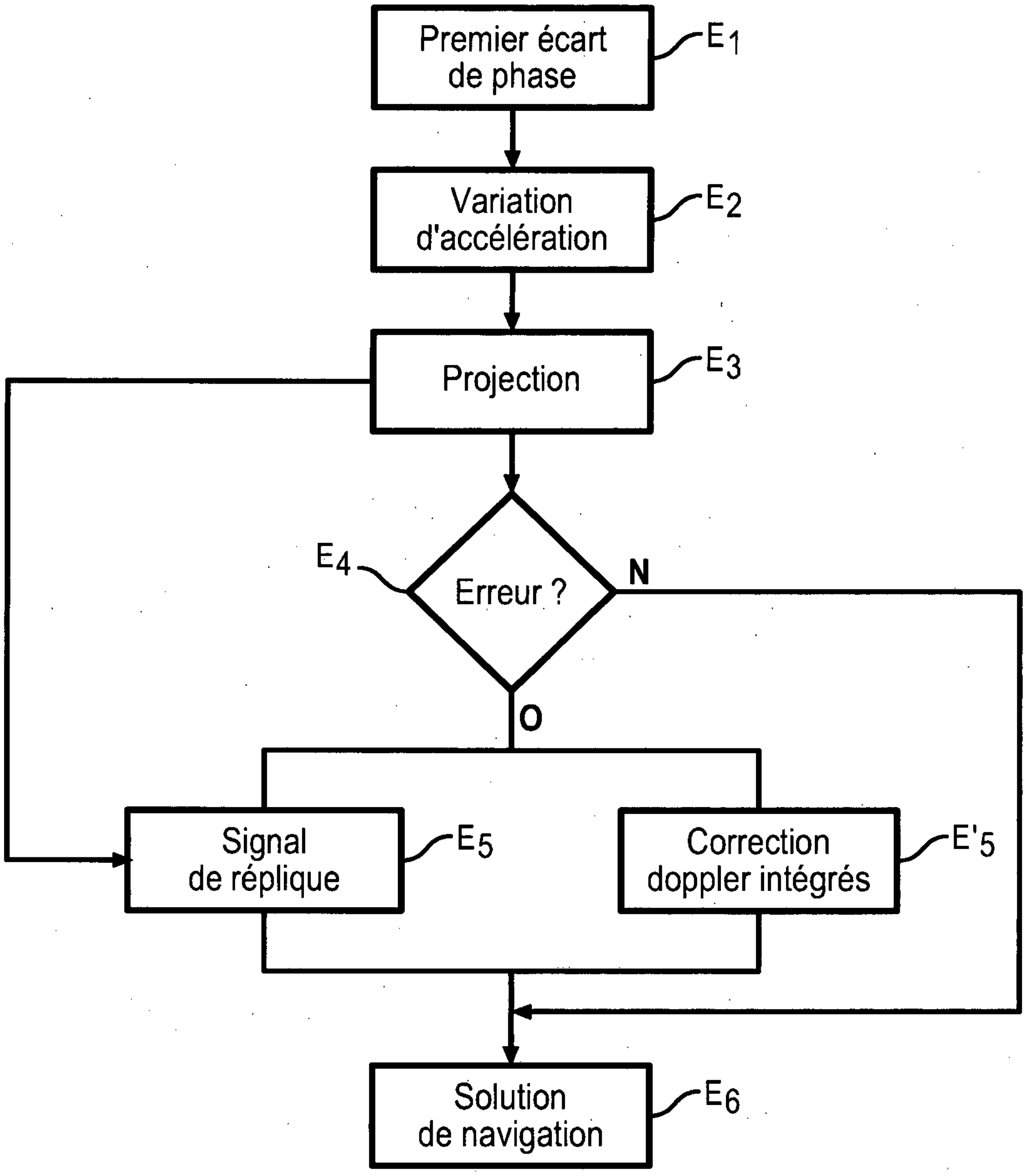

Premier écart de phase
E1
Variation d'accélération
E2
Projection
E3
E4
Erreur ?
N
O
Signal de réplique
E5
Correction doppler intégrés
E'5
Solution de navigation
E6

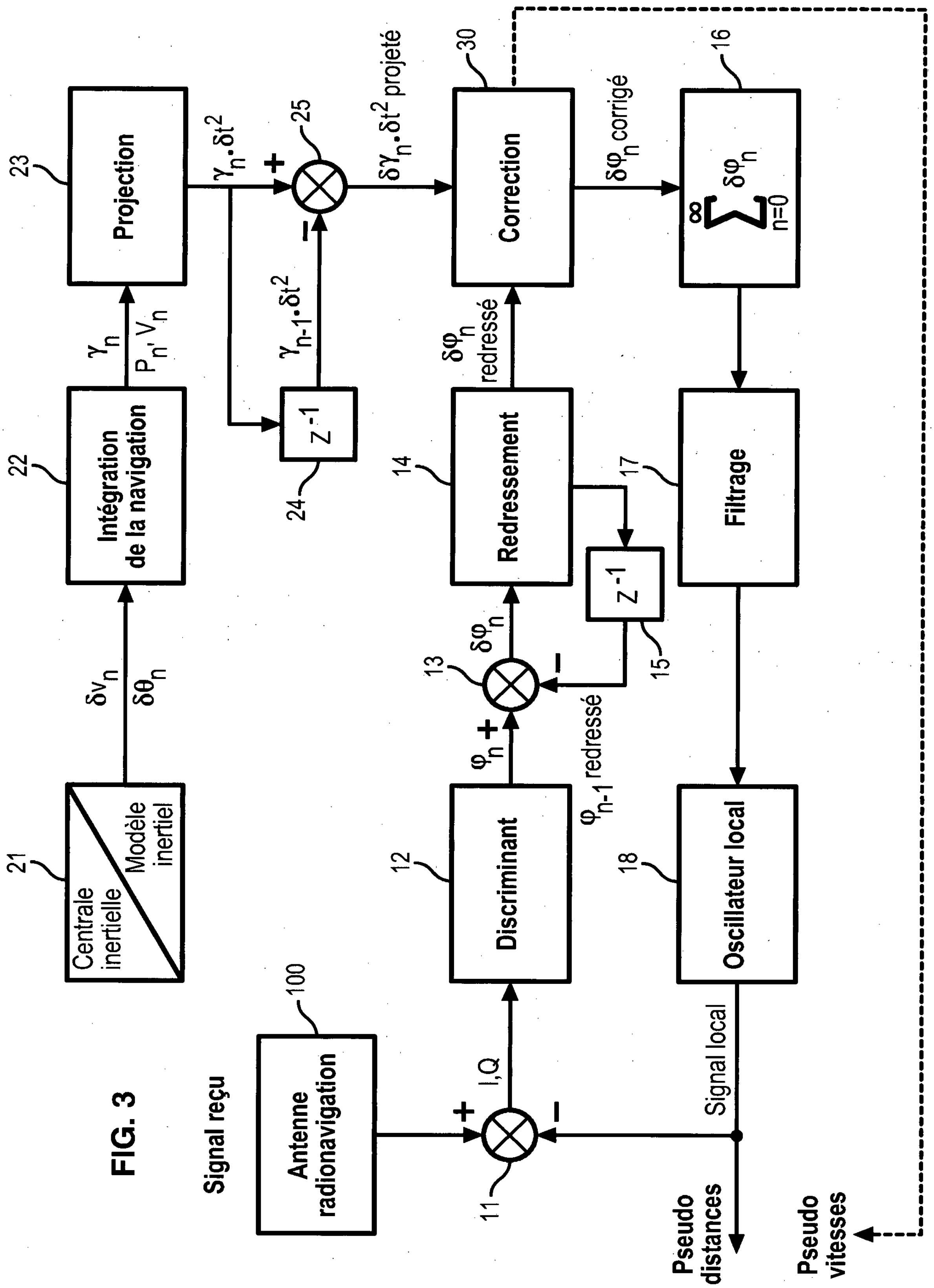
Signal reçu
Antenne radionavigation
100
11
I,Q
Signal local
Pseudo distances
Pseudo vitesses
Centrale inertielle
Modèle inertiel
21
$\delta v_n$
$\delta\theta_n$
Intégration de la navigation
22
$\gamma_n$
$P_n, V_n$
Projection
23
$\gamma_n \cdot \delta t^2$
25
$z^{-1}$
24
$\gamma_{n-1} \cdot \delta t^2$
$\delta\gamma_n \cdot \delta t^2$ projeté
Correction
30
$\delta\varphi_n$ corrigé
$\sum_{n=0}^{\infty} \delta\varphi_n$
16
Discriminant
12
$\varphi_n$
13
$\delta\varphi_n$
$\varphi_{n-1}$ redressé
$z^{-1}$
15
Redressement
14
$\delta\varphi_n$ redressé
Filtrage
17
Oscillateur local
18

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5969672 A